# EUROPEAN PATENT APPLICATION

(11) **EP 1 541 030 A2**
(43) Date of publication of application: **15.06.2005**
(21) Application number: 04078369.8
(22) Date of filing: 13.12.2004
(51) Int. Cl.: A22C 21/00

(54) **Device for filleting poultry**

(30) Priority: 12.12.2003 NL 1025009
(71) Applicant: Systemate Group B.V., 3281 NC Numansdorp (NL)
(72) Inventor: Barendregt, Gerrit, 3274 CP Heinenoord (NL); Jonkers, Hein c/o Systemate Group B.V., 3281 NC Numansdorp (NL)
(74) Representative: De Hoop, Eric

(57) **Abstract**

Device for treating poultry carcasses or parts thereof, comprising a holder (1) for retaining a carcass or part thereof during conveyance in a process direction for one or more treatments, wherein the holder comprises a holder body (2) having a centre longitudinal plane and at or near an upper side is provided with a support surface for the carcass and with a pressure member cooperating with the support surface for retaining the carcass, wherein the pressure member (7) is provided on a pressure arm (5) that is movable between a stand-by position, in which the carcass to be treated or a part thereof can be placed on the holder body, and an operative position, in which the carcass to be treated or a part thereof is retained on the holder body, wherein the device is furthermore provided with an operation device for moving the pressure arm between the stand-by position and the operative position, wherein the operation device comprises first operation means on the holder body, which under the influence of stationary positioned second operation means are movable transverse to the holder body between a first position or a second position wherein the operation device has moved the pressure arm into the stand-by position and into the operative position, respectively.

## Description

The invention relates to a device for use in filleting carcasses of poultry, particularly including breast (parts), such as whole breasts and/or breast caps, of poultry.

It is known to place carcass parts of slaughtered poultry on holders carried by a link conveyor circulating in a vertical plane, which holders are provided with means for retaining the carcass parts. The holders may successively be moved upright in one path and upside down in a return path past a placement station, in which the carcass parts are placed on the holders, a skinning station, one or more filleting stations and a removal station.

For a failure-free process and for sufficient efficiency it is of importance that the carcass parts are held firmly. For that purpose a lever structure on the holders is known to be used, which comprises a lever that is hinged to the front end of the holder and comprises a fork-shaped pressure end capable of pressing on the carcass part in front and sideways of the keel bone. The carcass part is thus kept pressed against the holder. In this case the position is ensured by one or more pointy pins projecting from the holder. For movement of the lever between a position in which it is stand-by and the carcass parts are placed and an operative position, an operation rod is present which projects at the front from the holder and extends inclined through the holder, which operation rod is movably connected with a lower end to a cam wheel that is rotatable about a transverse axis. At the lower side of the conveyor, the cam wheel is accessible to stationary positioned operation members, such as cams, which when engaging the cam wheel ensure a rotation stroke of the cam wheel, as a result of which the operation rod is pressed diagonally upwards or is retracted, the lever being tilted.

It has appeared that the passage made in the holder for the operation rod, which passage ends at the front at the top of the holder, is difficult to clean, as a result which a smooth, unimpeded translation of the operation rod may be hindered by penetrated meat portions. Furthermore the operation mechanism is rather complex and failure prone as a result. Furthermore the known operation mechanism takes up the lower side of the chain and the area underneath it.

Also known is a holder, particularly suitable for whole carcasses, which in the context of filleting means carcasses stripped of wings and legs, yet having whole breasts, which holder is provided with an operation rod provided with a pressure nose at its end and horizontally slidable. The sliding path is situated at the level of the pressure location. The operation mechanism also comprises a cam wheel situated at the other side of the conveyor.

It is an object of the invention to improve on at least one of the aforementioned aspects.

From one aspect the invention provides a device for treating poultry carcasses or parts thereof, comprising a holder for retaining a carcass or part thereof during conveyance in a process direction for one or more treatments, wherein the holder comprises a holder body having a centre longitudinal plane and at or near an upper side is provided with a support surface for the carcass and with a pressure member cooperating with the support surface for retaining the carcass, wherein the pressure member is provided on a pressure arm that is movable between a stand-by position, in which the carcass to be treated or a part thereof can be placed on the holder body, and an operative position, in which the carcass to be treated or a part thereof is retained on the holder body, wherein the device is furthermore provided with an operation device for moving the pressure arm between the stand-by position and the operative position, wherein the operation device comprises first operation means on the holder body, which under the influence of relatively stationary positioned second operation means are movable transverse to the holder body between a first position and a second position wherein the operation device has moved the pressure arm into the stand-by position or into the operative position, respectively.

Due to the various directions of movement, the operation means that are situated at the lower side of the conveyor can be dispensed with, so that the holder can be kept simple in that respect. The lower side of the conveyor will become available for other functions. Furthermore the direction of movement of the first operation means renders an embodiment of the stationary positioned second operation means possible that is simple and takes up little space.

In a preferred embodiment the holder body is attached flat on a conveyor, so that the carcass to be treated or a part thereof is horizontally supported. The horizontal space in the holder body can be utilised here for parts of the operation device, for one or more parts having a horizontal motion (such as the pressure arm itself to be discussed below or an operation rod for a lever) for transfer of movement to the pressure member then situated at a longitudinal end at the top of the holder body.

Preferably the operation device is adapted for converting the transverse motion of the first operation means into a motion of the pressure arm that is situated in a plane parallel to the centre longitudinal plane. The motion of the pressure arm can be linear, in which case the holder would be particularly suitable for retaining carcasses having whole breasts, or rotating, in which case the holder would be particularly suitable for retaining breast caps.

Preferably the first operation means comprise an operation member which in the first position with a first portion projects sidewards from the holder body so that it can be engaged by the second operation means, and preferably is rotatable to the second position about an axis that is symmetrically situated in the holder body and substantially transverse to the process direction. Preferably at the opposite side of the holder body the operation member in the second position projects sidewards therefrom so that it can be engaged by the second operation means. The operation member can simply and reliably be engaged by stationary second operation means in order to be moved from the first to the second position. In case in the stand-by position and in the operative position the operation member projects sidewards to opposite sides of the holder body the first operation means, particularly the operation member, will as if of their own accord be positioned for the next engagement by the second operation means.

Preferably the axis is perpendicular to the process direction and/or the operation member is rotatable in a horizontal plane parallel to the process direction.

In a simple embodiment the second operation means can comprise a stationary positioned cam which is positioned to come into engagement with operation edges provided on the operation member.

In a simple reliably operating embodiment the operation member is plate-shaped.

In a first further development the pressure arm is linearly movable between the stand-by position and the operative position, particularly horizontally.

In a first simple embodiment thereof the operation device comprises a slide that is reciprocally movable by the operation member in process direction and within the holder body, wherein between the slide and the pressure arm a transfer mechanism has been disposed in the holder body, transferring the displacement of the slide to the pressure arm, wherein preferably a cam is attached on the slide, which cam is guided in an elongated hole in the operation member. The transfer mechanism may comprise a member that is rotatable about an axis perpendicular to the centre longitudinal plane, resulting in the direction of the transferred motion being reversed.

In an alternative second embodiment thereof the pressure arm can be provided with a first rack, wherein the operation device comprises a first pinion, driven by the first operation means.

The first pinion can be disposed on a shaft that is placed so as to be rotatable in the holder, which shaft is in engagement with the first operation means for being rotated thereby. In a simple embodiment said shaft can be provided with a second pinion that is in engagement with the first operation means. At opposite ends the shaft can be provided with the first and second pinions.

The transfer of the movement can reliably take place if the shaft is oriented transverse to the path of movement of the pressure arm.

Preferably the shaft is bearing mounted in the holder body.

Preferably the first operation means, particularly the operation member, comprise a second rack, which is in engagement with the second pinion. The second rack preferably is situated on a bent toothed edge, which preferably is circularly bent, preferably convex.

In a simple and easy-to-clean embodiment, the second operation means comprise a stationary positioned cam, which comes into engagement with operation edges provided on the operation plate.

Preferably the device according to the invention discussed above is suitable for retaining so-called whole poultry breasts.

In a second further development of the device according to the invention the pressure arm is part of a lever, which is attached to the holder body so as to be rotatable about a first hinge. Such a device is particularly suitable for parts of poultry carcasses, particularly breast caps.

Preferably the lever further comprises an operation arm, which is situated at the side of the first hinge that faces away from the pressure arm, wherein the operation device comprises an operation rod, of which a first end is movably connected to the operation arm, which operation rod is linearly slidable substantially within the holder body and parallel to the centre longitudinal plane, between first and second positions that correspond to the stand-by position and the operative position of the pressure arm, respectively.

With a second end the operation rod can be movably connected to the first operation means. A cam can then be attached on the second end of the operation rod, which cam is guided in an elongated hole in the first operation means.

In this embodiment as well, it is advantageous if the first operation means comprise an operation plate that is rotatable perpendicular to the centre longitudinal plane, in which operation plate in this embodiment the elongated hole has been disposed. The operation plate preferably is rotatable in a plane parallel to the process direction, so that the occupation of space can be kept limited in a (vertical) direction perpendicular to the process direction.

The elongated hole may be inclined to the process direction and have turned ends for the cam, wherein at least the turned elongated hole end for the cam is formed for a locking action in operative position. The lever can thus be kept in the stand-by position and the operative position, the latter with higher locking forces in connection with the process forces.

The said operation rod preferably is slideable according to a line that is spaced apart from the first hinge, preferably near the lower side of the holder body, which lower side is situated near a conveyor for the holder. As a result the area near the lever is kept free, and the risk of contaminating the passage for the operation rod is limited. This risk is further limited when the operation rod is movable according to a line that is parallel to the process direction.

In a preferred embodiment the operation rod at the first end is provided with an upright arm which is rigidly connected thereto and which is rotatably connected to the operation arm of the lever, as a result of which the movement line of the operation rod can be kept far beyond the area of the lever. In a simple embodiment thereof the upright arm is provided with an elongated hole in which a cam attached on the operation arm is guided, wherein the elongated hole slopes with respect to the process direction. Preferably the elongated hole slopes upwards in the process direction. It is furthermore preferred that the elongated hole is straight.

From a further aspect the invention provides a device for treating poultry carcasses or parts thereof, particularly breast caps, comprising a holder for retaining a carcass or a part thereof during conveyance in a process direction for one or more treatments, particularly skinning and/or filleting, wherein the holder comprises a holder body having a centre longitudinal plane and at or near an upper side is provided with an abutment surface for the carcass and with a pressure member cooperating with the abutment surface for retaining the carcass, wherein the pressure member is provided on a pressure arm of a lever, which is attached on the holder body so as to be movable about a first hinge, between a stand-by position and an operative position, wherein the hinge axis extends transverse to the centre longitudinal plane and is situated between the pressure arm and an operation arm of the lever, wherein the operation arm is movably connected to a first end of an operation rod, which is linearly slideable substantially within the holder body in a plane parallel to the centre longitudinal plane, between first and second positions that correspond to the stand-by position and the operative position of the lever, respectively, and with a second end is movably connected to first operation means provided on the holder, which under the influence of stationary positioned second operation means are movable transverse to the holder body between a stand-by position and an operative position in which the operation rod is in the first or the second position, respectively.

From a further aspect the invention provides a device for treating poultry carcasses or parts thereof, particularly breast caps, comprising a conveyor having holders attached on a support surface thereof for retaining a carcass or a part thereof during conveyance in a process direction for one or more treatments, particularly skinning and/or filleting, wherein the holder comprises a holder body having a centre longitudinal plane and which at or near an upper side is provided with an abutment surface for the carcass and with a pressure member cooperating with the abutment surface for retaining the carcass, wherein the pressure member is provided on a pressure arm of a lever, which is attached on the holder body so as to be movable about a first hinge, between a stand-by position and an operative position, wherein the hinge axis extends transverse to the centre longitudinal plane and is situated between the pressure arm and an operation arm of the lever, wherein the operation arm is movably connected to a first end of an operation rod, which is linearly slideable substantially within the holder body in a plane parallel to the centre longitudinal plane, between first and second positions that correspond to the stand-by position and the operative position of the lever, respectively, and with a second end is movably connected to first operation means provided on the holder, which under the influence of stationary positioned second operation means are movable between a stand-by position and an operative position in which the operation rod is in the first or the second position, respectively, wherein the first operation means are situated at the same side of the support surface of the conveyor as the holder bodies.

By letting the area below the holder free this area can be used for other purposes.

In a further development the invention provides a device of the type discussed above, wherein the lower side of the holder body is attached, preferably flat, on a support surface of a conveyor, rotatably with respect to said support surface, wherein the holder further comprises rotation means for rotating the holder body about an axis of rotation that is situated perpendicular to the process direction and parallel to the centre longitudinal plane, preferably therein, wherein the rotation means preferably comprise a set of rotation members that are situated at the side of the conveyor that faces away from the support surface and are connected to the holder body for rotation thereof and positioned for engagement with a stationary positioned operation means.

Said rotation means considered in vertical sense can remain below the first operation means, as a result of which the build-up of the holder body and the construction of the holder can remain simple.

Such an arrangement of rotation means may optionally also be used for holders that have another retaining mechanism than described above, for instance the retaining mechanism of the known holders described in the preamble.

From a further aspect the invention provides a device for treating poultry carcasses or parts thereof, comprising a holder for retaining a carcass or part thereof during conveyance in a process direction for one or more treatments, wherein the holder comprises a holder body and at or near an upper side is provided with a support surface for the carcass and with a pressure member cooperating with the support surface for retaining the carcass, wherein the pressure member is provided on a pressure arm that is movable between a stand-by position, in which the carcass to be treated or part thereof can be placed on the holder body, and a operative position, in which the carcass to be treated or part thereof is retained on the holder body, wherein the device is furthermore provided with an operation device for moving the pressure arm between the stand-by position and the operative position, wherein the operation device comprises first operation means on the holder body, which under the influence of relatively stationary positioned second operation means are movable between a first position and a second position wherein the operation device has moved the pressure arm into the stand-by position or into the operative position, respectively, wherein the lower side of the holder body is attached, preferably flat, on a support surface of the conveyor, rotatably with respect to said support surface, wherein the holder further comprises rotation means for rotating the holder body about an axis of rotation that is situated perpendicular to the process direction and in the centre longitudinal plane, wherein the rotation means preferably comprises a set of rotation members that are situated at the side of the conveyor that faces away from the support surface, which members are connected to the holder body for rotation thereof and are positioned for engagement with a stationary positioned operation means.

Preferably the said rotation members comprise at least one toothed wheel that is rotatable about a vertical axis and capable of cooperation with a stationary positioned rack. The rotation members can be connected to the holder body by means of an upright rod extending through the conveyor. The rotation members can comprise a toothed wheel train of at least two toothed wheels. The said horizontal position of the holder body may advantageously be used here, as a result of which sufficient material of the holder body is present for mounting several adjacent toothed wheels. The rotation can be realised more quickly as a result.

Preferably means are present for locking the position of the holder body in the desired rotation positions, and means for unlocking them in order to make rotation possible. The means for locking may be adapted to be operative in two 180 degrees different rotation positions of the holder body.

From a further aspect the invention provides a holder suitable and intended for a device according to the invention.

From a further aspect the invention provides a slaughter line provided with a device according to any one of the preceding claims.

The invention will be elucidated on the basis of a number of exemplary embodiments shown in the attached drawings, in which:
Figure 1 shows a side view of an exemplary embodiment of a breast cap holder according to the invention, in the operative position;
Figure 2 shows the breast cap holder of figure 1 in the stand-by position;
Figure 3 shows a schematic bottom view of the breast cap holder of figures 1 and 2;
Figure 4 shows an end view of the breast cap holder of figures 1-3;
Figure 5 shows a side view of a first exemplary embodiment of a whole-breast holder according to the invention, in the operative position;
Figure 6 shows the whole-breast holder of figure 5, in the stand-by position;
Figure 7 shows a schematic bottom view of the whole-breast holder of figures 5 and 6;
Figure 8 shows an end view of the whole-breast holder of figures 5-7;
Figures 9A and 9B show a bottom view of a locking mechanism for an operation plate in the whole-breast holder according to figures 5-8;
Figure 10 shows a schematic view of an operation device for a second exemplary embodiment of a whole-breast holder according to the invention;
Figure 11 shows a side view of the second exemplary embodiment of the whole-breast holder having the operation device of figure 10 in the stand-by position; and
Figure 12 shows an end view of the whole-breast holder of the figures 10 and 11.

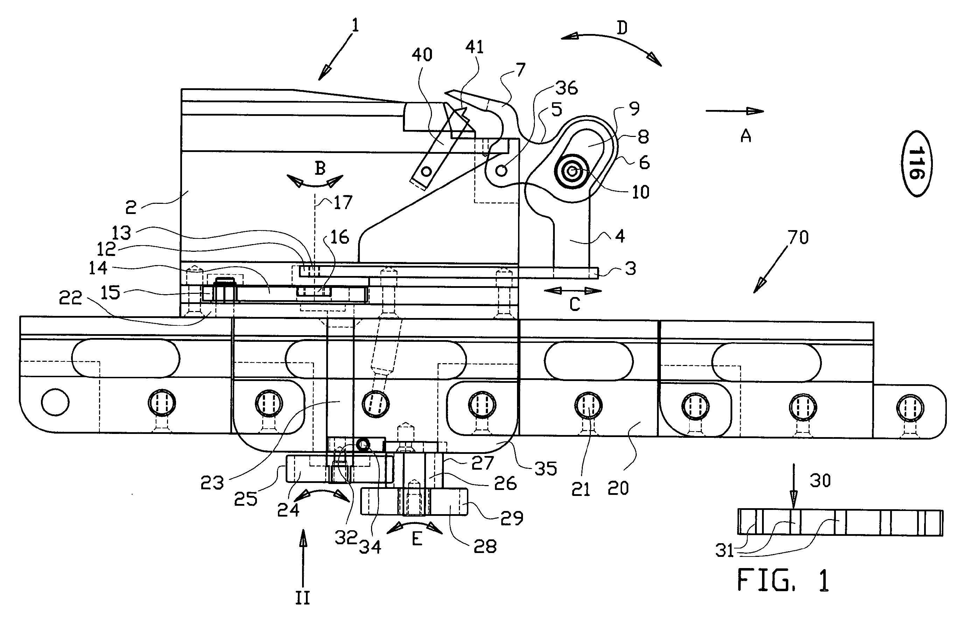

The breast cap holder 1 in figure 1 substantially consists of a hard synthetic body 2, which by means of member 35 is attached to a guided conveyor chain 70 which has been built up from synthetic links 20 that are connected to one another by means of steel transverse pins 21. The synthetic body 2 itself is attached to a steel strip 22 and rotatably (B) connected to the conveyor chain 70 and member 35. To that end the strip 22 is attached (rotation-fixedly) on a vertical shaft 23, which at the lower end is provided with a toothed wheel 24 having teeth 25 which wheel is rotation-fixed thereto. The teeth 25 of toothed wheel 24 are in engagement with teeth 27 of a pinion 26, that is attached to pending member 35 so as to be freely rotatable and at the lower end is provided with toothed wheel 28 having teeth 29 which wheel is rotation-fixedly attached thereto. When the chain is moved along in the direction A, the teeth 29 come into engagement with teeth 31 of a stationary positioned rack 30. As a result the toothed wheel 28 will be rotated, and thus toothed wheel 26 and thus toothed wheel 24. The shaft 23 is thus also rotated and thus the strip 1 and body 2. In this way the breast cap holder 1 can be rotated over 180° in orientation, which can be advantageous for carrying out various treatments, such as in a filleting line, such as skinning and the subsequent filleting.

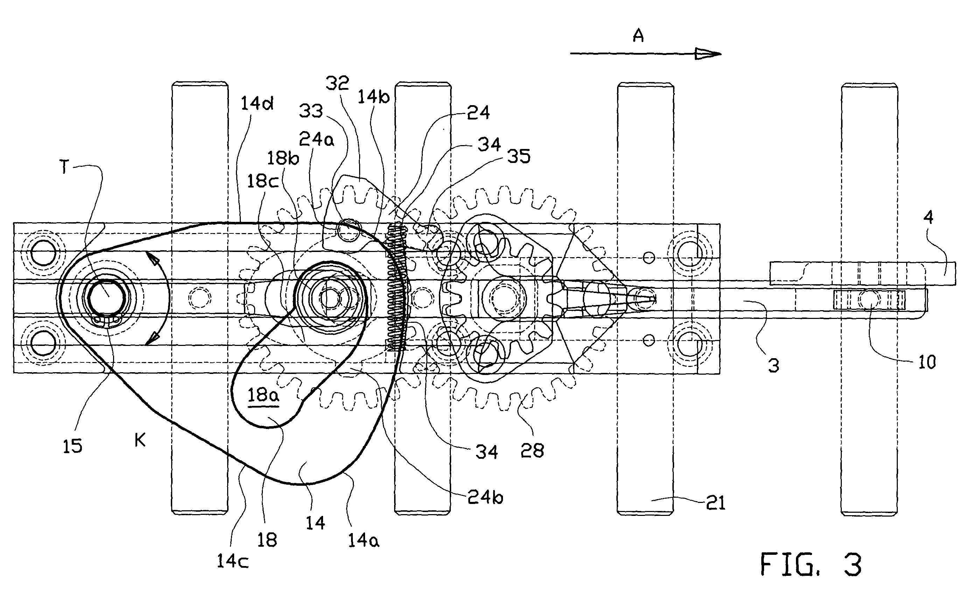

For maintaining an orientation, as shown, a locking plate 32 may be present, which is rotatable in the horizontal plane about shaft 34 and provided with a blocking pin 33 projecting downward. In the locking position shown in figure 3, the blocking pin 33 is snugly accommodated in a radially and inwardly opening accommodation space 24a in toothed wheel 24. By means of compression spring 34 the locking plate is pushed outward, resulting in the blocking pin being firmly pushed into the accommodation space 24a and the position of the toothed wheel 24 being locked. The plate 32 may project sidewards in order to be engaged by a stationary positioned cam (not shown), and be pushed inwards counter the spring pressure of the spring 34, thus urging the blocking pin 33 out of the accommodation space 24a resulting in the toothed wheel being able to rotate. When the toothed wheel 24 has been rotated over 180 degrees, and thus the holder, the blocking pin ends up in front of a second accommodation space 24b, and as a result of the action of the compression spring 34 can be pushed in there, in order to thus lock the toothed wheel 24 and thus the holder in the new rotation position. If so desired more accommodation spaces may be provided, adjusted to the desired rotation positions.

A metal strip 3, slidable in the direction C, is accommodated in the synthetic body 2, at the projecting end of which metal strip, considered eccentrically in a vertical plane, an upright strip 4 is fixedly attached. The upright strip 4 has a widened upper end 6, on which a freely rotatable ring 10 has been attached.

The ring 10 extends through a slotted hole 9 in an arm 8 of a pressure lever 5, which is hinged about hinge point 36 in the direction D and at the other end is provided with a fork 7 for pressing a breast cap that is not further shown here, downwards. In the operative position the breast cap is engaged by the fork on either side of the shoulder end of the keel bone. A stationary pin 40 having a sharp edge 41 engages the lower side of the breast cap. In that condition the breast cap is reliably held on the breast cap holder 1 in order to be subjected to various treatments.

At the other end 12, the metal strip 3 is provided with a tapped hole 13, through which a bolt 17 extends. Below the hole 13 there is a bush or ring 16, which extends on an operation plate 14 further shown in figure 3, which operation plate is rotatable (directions K) about a point of rotation 15 (axis T). As can be seen in figure 3, the operation plate 14 is provided with a slot 18, in which the bush 16 is movable. The slot 18 has an end 18a, an end 18b and a straight portion 18c situated in between, wherein the portion 18c is inclined with respect to the circular path about point of rotation 15 and the ends 18a and 18b are tangential to it. The plate 14 is provided with two bent, forwardly oriented side edges 14a,b and with inclined edges 14c, d that are turned more in opposite direction.

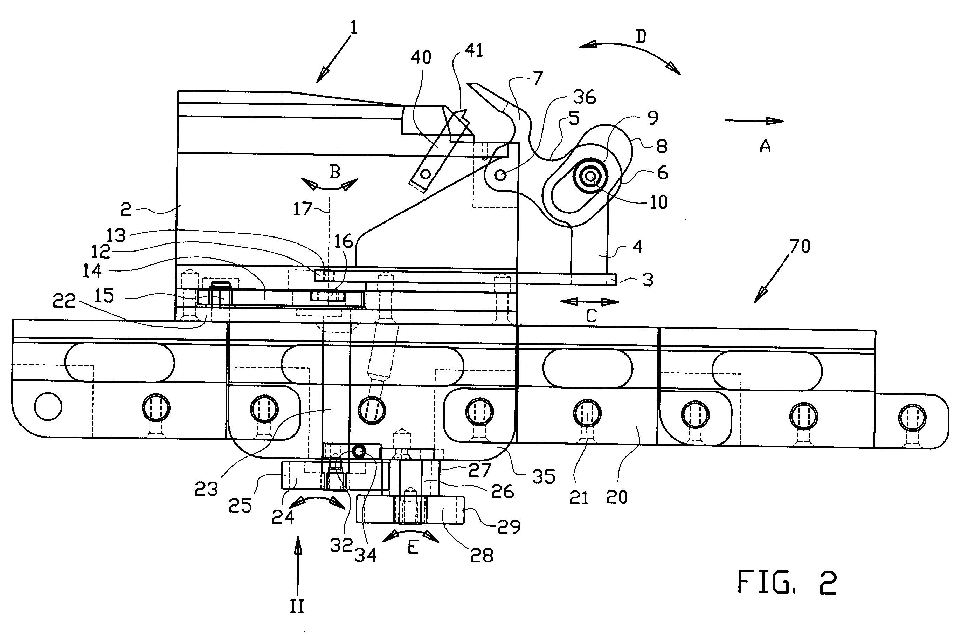

In figure 3 the position of the operation plate 14 is shown in the (stand-by) position of figure 2. The edge 14d falls within the profile of the holder body 2. When a stationary positioned cam abuts edge 14a of operation plate 14, the operation plate will be pushed in, which urges bush 16 to follow the changed position of the slot 18. The strip 3 connected to bush 16 can then only move in the direction C, and therefore will slide from the position shown in figure 2 to the position shown in figure 1. Therewith the ring 10 has also been displaced to the right and moved in the slotted hole 9 as a result of which the pressure lever 5 has also been rotated to a pressing operative position. The plate 14 will now lie with the edge 14c just within the profile of the holder body 2, in a set-up mirrored to the one of figure 3.

As can be seen in figure 3 the width of the operation plate 14 is larger than the width of the synthetic body 2. When the operation plate 14 will have been rotated to a position belonging to figure 1, the operation plate will for a large part project to the other side. For moving the pressure lever 5 back the edge 14b of the operation plate 14 is engaged by a cam that is stationary positioned at the other side, in order to be urged again to the position shown in figure 3. The edges 14c, d can be utilised for operation of the plate 14 in a movement of the holder body 2 in a direction opposite to A, or in direction A after 180° rotation of the holder body 2.

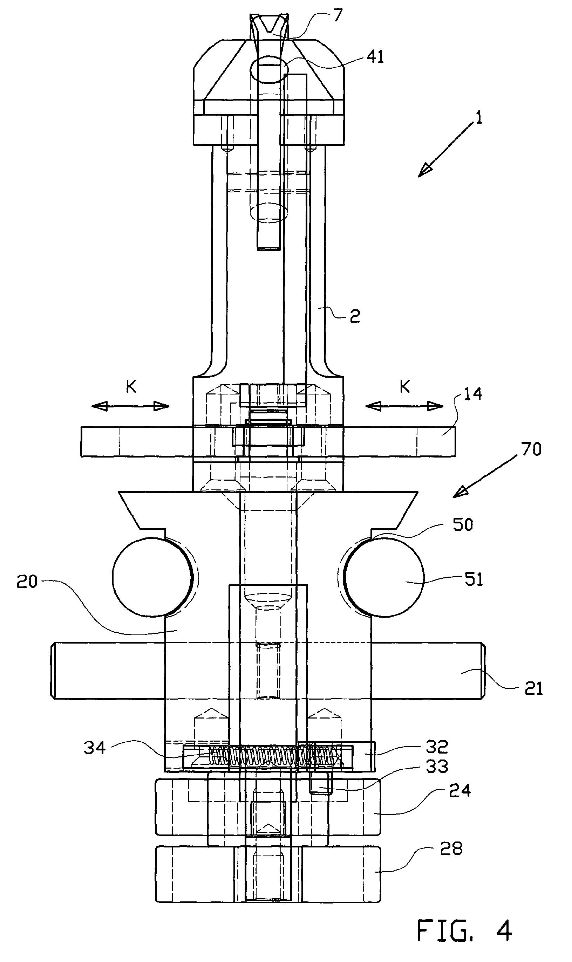

Figure 4 shows how the conveyor is kept straight by means of longitudinal bars 51 that extend in sideward oriented grooves 50.

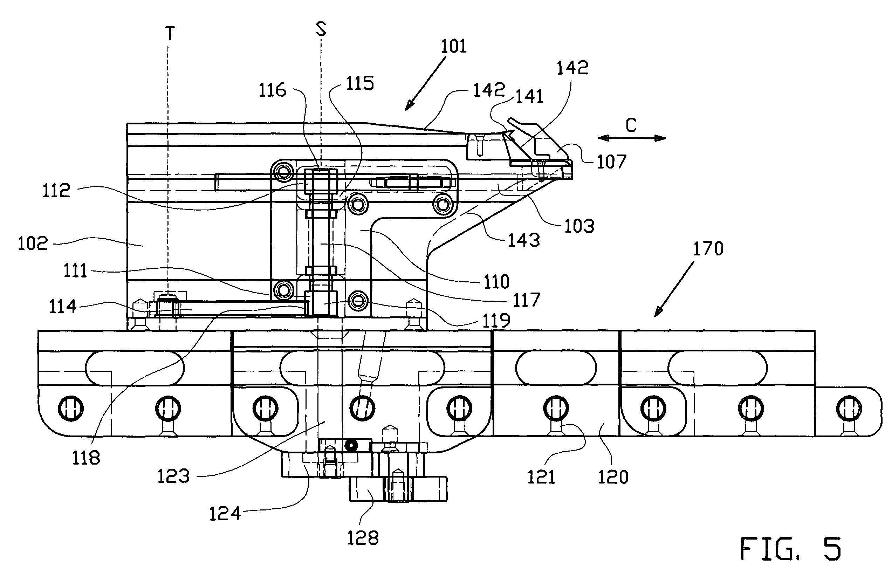

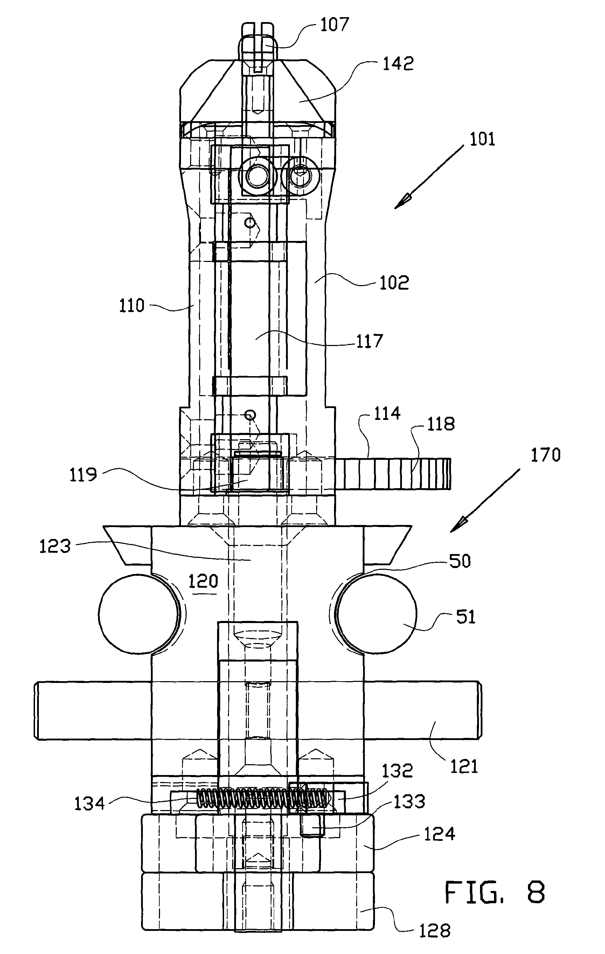

The holder 101 of the figure 5-8 is particularly suitable for holding whole carcasses. The holder body 102 is provided here with an end portion 143 that is narrowed in horizontal direction, in which end portion a pressure arm 103 has been accommodated so as to be reciprocally slidable in horizontal directions C. At the end the pressure arm 103 is provided with a pressure member or pressure nose 107, with which a carcass (part) that is not further shown, can be pressed against support surfaces 142 on the holder body 102. A fixing pin 141 projects from the support surfaces 142.

The holder body 102 is attached to a conveyor chain 170 circulating in a vertical plane, which conveyor chain consists of links 120 which are rotatably connected to each other by means of pins 121. The pins 121 extend sidewards so that they can be engaged by driving means for the conveyor chain 170 which means are not further shown.

Below the holder body 102, accessible through lid 110 that can be removed sidewards, a shaft 117 has been accommodated so as to be rotatable about a vertical axis S, which shaft at the upper end is provided with a pinion 116 having teeth 112 and at the lower end is provided with pinion 119 having teeth 111. The teeth 112 are in engagement with a rack 115 on an inner end of the pressure arm or pressure rod 103.

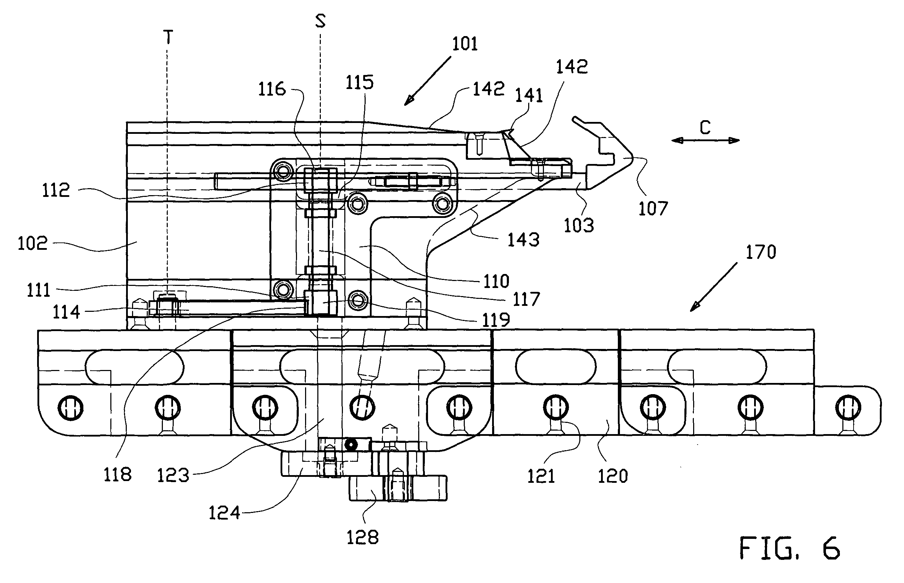

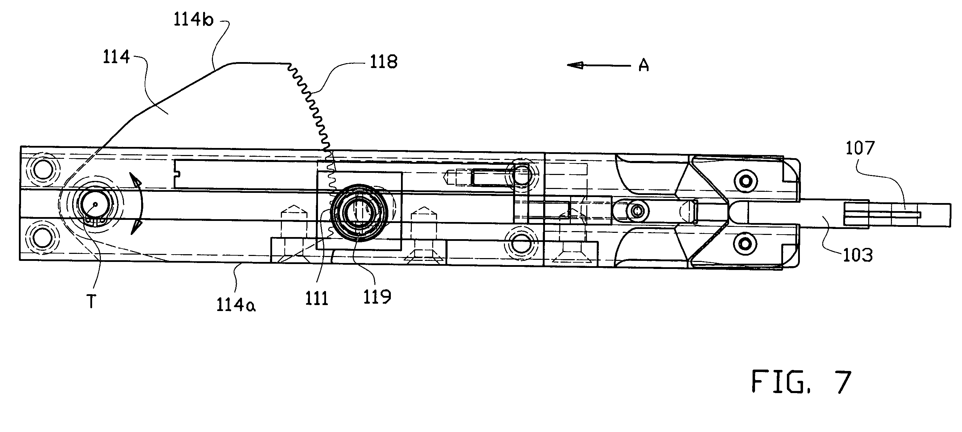

The pinion 119 with the teeth 111 engages into teeth 118 on an operation plate 114 that is accommodated in the holder body 2 so as to be rotatable about vertical axis T. The operation plate 114 is further shown in figure 7, showing its side edges 114a, 114b, which one or the other extend sidewards from the holder body 2 in order to abut a stationary operation cam that is not further shown. The conveyance of the holder 101 in this case is in one direction A. The trailing, toothed edge 118, is bent according to a circle having its centre on the axis T. When the edge 114a abuts a stationary cam (not shown), the plate 114 is rotated to the inside, about axis T, wherein the teeth 118 have the pinion 119 rotate, and thus the shaft 117, which with pinion 119 reciprocally moves the pressure arm 103 in the directions C in order to move the pressure member 107 between a stand-by position (figure 6) and an operative position (figure 5).

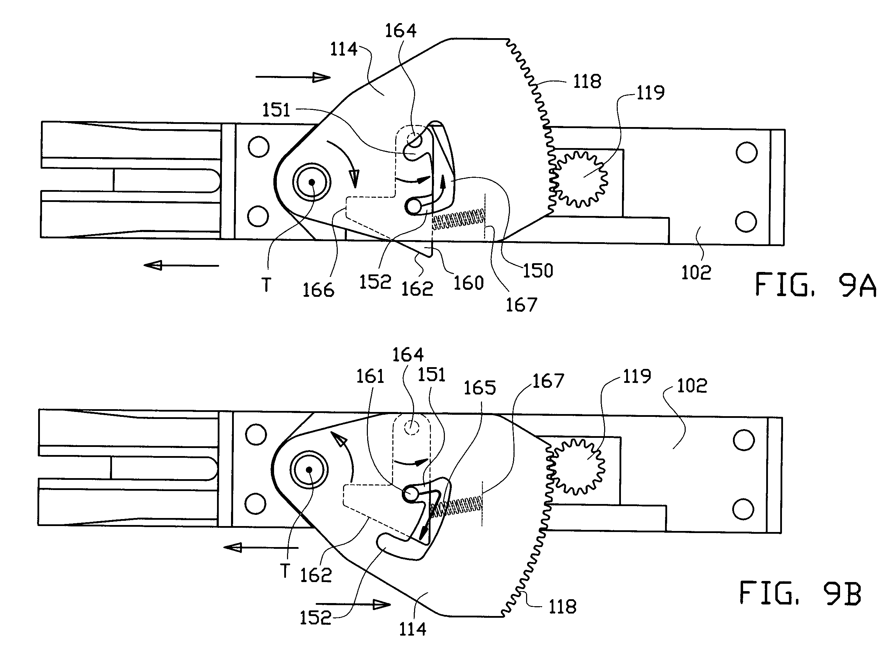

In the figures 9A and 9B the operation plate 114 is shown in the first and second position, respectively, locked in these positions by a locking member 160. The operation plate 114 is provided to that end with a bent slit 150, having turned ends 151 and 152.

A locking pin 161 on a locking member 160 extends into the slit 150/151/152. The locking member 160 is attached to the holder body 102 so as to be rotatable about a pin 164, and in the first and second position of the operation plate 114 is biassed to press against stop surface 166 of holder body 102 by means of compression spring 165 supporting against surface 167 on the holder body 102.

As can be seen the locking member 160 with inclined run-on surface 166 projects sidewards beyond the holder body 102 in the first/second position of the operation plate 114. Said surface 166 can be engaged by a stationary positioned cam, as a result of which the locking member 160 will rotate about pivot pin 164 counter to the action of the compression spring 165. As a result the locking pin 164 will move out of the turned slit end 151 or 152, and the operation plate 114 is free after engagement by stationary positioned means to rotate about axis T, until the other position has been taken. Under the influence of the compression spring 165, the locking member 160 is then able to move with the pin 163 in the turned slit end 151 or 152 in question again, thus locking the position of the operation plate 114 again. Thus the position of the pressure arm 103 and thus the pressure member or pressure nose 107 is secured again, in the operative position and the stand-by position, respectively.

It will be understood that a comparable locking mechanism can also be used on breast cap holders that are comparable to those shown in the figures 1-4, taking the presence of the slot 18 into account.

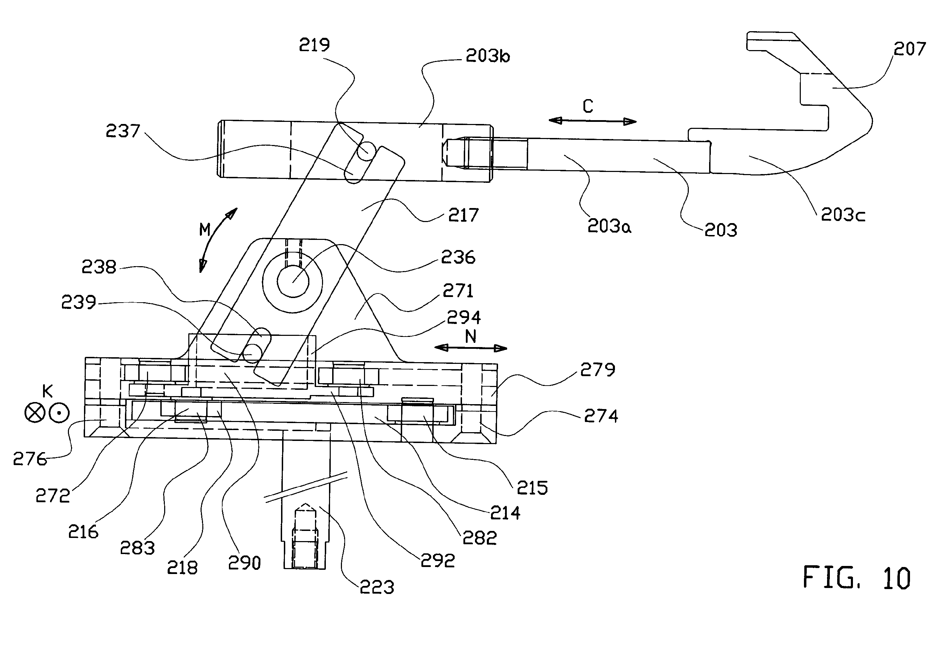

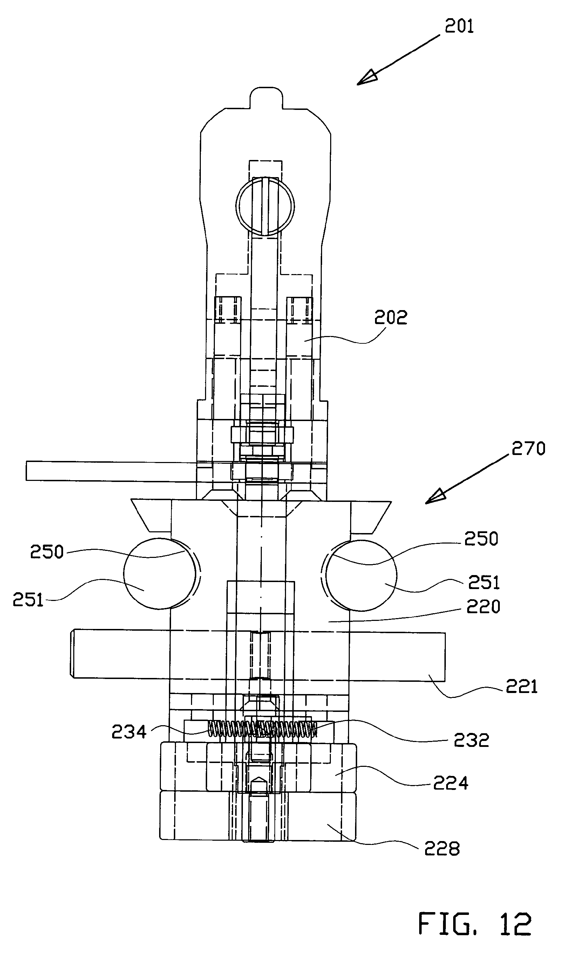

The holder 201 of the figures 10-12 is also particularly suitable for holding whole breasts. The holder body 202 is provided here with an end portion 243 that is narrowed in horizontal direction, in which end portion a pressure arm 203 has been accommodated so as to be reciprocally slidable in horizontal directions C. At the end the pressure arm 203 is provided with a pressure member or pressure nose 207, with which a carcass (part) that is not further shown can be pressed against support surfaces 242 on the holder body 202. A fixing pin 241 projects from the support surfaces 242.

The holder body 202 is attached to a conveyor chain 270 circulating in a vertical plane, which conveyor chain consists of links 220 which are rotatably connected to each other by means of pins 221. The pins 221 extend sidewards so that they can be engaged by driving means for the conveyor chain 270, which means are not further shown.

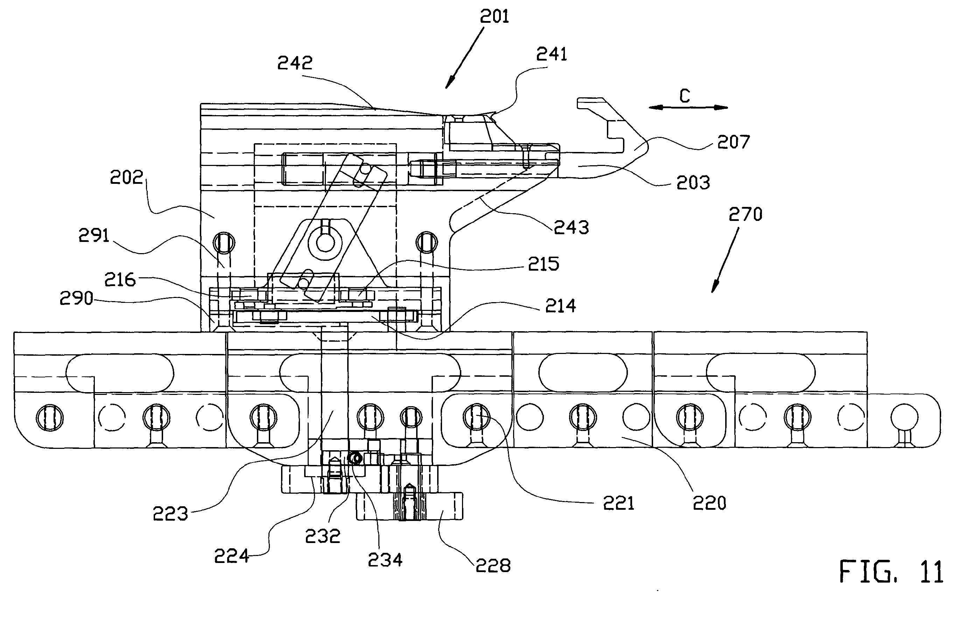

In the lower side of the holder body 202 a metal housing 279 has been placed in a recess 290, which housing is attached to the holder body 202 by means of bolts 291 (figure 11) extending through passages 274. At the upper side the metal housing 279 has been provided with an integrally formed vertical plate 271, on which by means of a hinge 236 two elongated plates 217 are rotatably (directions M) attached in a vertical plane. At the upper end of the plates 217 two open-ended slots 237 have been arranged, in which in a slideable manner a pin 219 extends, which pin 219 projects on both sides of arm end member 203b. The arm end member 203b is attached to arm member 203a, which is attached to arm end 203c, and thus forms the arm 203 which is accommodated in the holder body 202 and is reciprocally slideable in directions C.

At the lower end of the plates 217 as well, open-ended slots 238 have been disposed, in which in a slideable manner a pin 239 extends, which pin 239 projects on both sides of a vertical plate 281. The plate 281 forms one unity with a sliding plate 280, which is reciprocally slideable in the directions N in the housing 270. The (horizontal) sliding plate 280 is provided with rollers 282 for that purpose. At the lower side the sliding plate 280 is provided with a roller 216, extending in a slot 218 of an operation plate 214, which corresponds to operation plate 14 of the embodiment of figures 1-4 and is operable in the same manner. A difference however is that the point of rotation of the plate 214 is now at the front, at the location of hinge 215, instead of at the rear like in figures 1-4.

When in the stand-by position shown in figures 10 and 11, the operation plate 214 is rotated about hinge 215 in the direction K, the roller 216 in the drawing will be urged to the right due to the change in the course of the slot 218. As a result the sliding plate 280 will be slid to the right, and thus the pin 239. As a result the plates 217 will tilt rearwards in the direction M, as a result of which the pin 237 is urged to the left and thus the arm 203, due to which the pressure member 207 is urged to the operative position.

In the embodiments shown in the figures 1-4 and 1-12 the motions following the transversely moving operation plate all take place in one plane parallel to the centre longitudinal plane of the holder.

It will be understood that the operation mechanisms described are merely examples and that other operation mechanisms can be used without going beyond the scope of the invention.

## Claims

1. Device for treating poultry carcasses or parts thereof, comprising a holder for retaining a carcass or part thereof during conveyance in a process direction for one or more treatments, wherein the holder comprises a holder body having a centre longitudinal plane and at or near an upper side is provided with a support surface for the carcass and with a pressure member cooperating with the support surface for retaining the carcass, wherein the pressure member is provided on a pressure arm that is movable between a stand-by position, in which the carcass to be treated or a part thereof can be placed on the holder body, and an operative position, in which the carcass to be treated or a part thereof is retained on the holder body, wherein the device is furthermore provided with an operation device for moving the pressure arm between the stand-by position and the operative position, wherein the operation device comprises first operation means on the holder body, which under the influence of relatively stationary positioned second operation means are movable transverse to the holder body between a first position and a second position wherein the operation device has moved the pressure arm into the stand-by position or into the operative position, respectively.

2. Device according to claim 1, wherein the operation device is adapted for converting the transverse motion of the first operation means into a motion of the pressure arm that is situated in a plane parallel to the centre longitudinal plane.

3. Device according to claim 1 or 2, wherein the first operation means comprise an operation member which in the first position with a first portion projects sidewards from the holder body so that it can be engaged by the second operation means, and preferably is rotatable to the second position about an axis that is symmetrically situated in the holder body and substantially transverse to the process direction.

4. Device according to claim 3, wherein at the opposite side of the holder body the operation member in the second position projects sidewards therefrom so that it can be engaged by the second operation means.

5. Device according to claim 3 or 4, wherein the axis is perpendicular to the direction of movement and/or the operation member is rotatable in a horizontal plane parallel to the process direction.

6. Device according to claim 3, 4 or 5, wherein the second operation means comprise a stationary positioned cam which is positioned for engagement with operation edges provided on the operation member.

7. Device according to any one of the claims 2-6, wherein the operation member is plate-shaped.

8. Device according to any one of the preceding claims, wherein the pressure arm is linearly movable between the stand-by position and the operative position.

9. Device according to claim 8, wherein the operation device comprises a slide that is reciprocally movable by the operation member in process direction and within the holder body, wherein between the slide and the pressure arm a transfer mechanism has been disposed in the holder body, transferring the displacement of the slide to the pressure arm, wherein preferably a cam is attached on the slide, which cam is guided in an elongated hole in the operation member.

10. Device according to claim 9, wherein the transfer mechanism comprises a member that is rotatable about an axis perpendicular to the centre longitudinal plane, resulting in the direction of the transferred motion being reversed.

11. Device according to claim 8, wherein the pressure arm preferably is provided with a first rack, wherein the operation device comprises a first pinion, driven by the first operation means, wherein the first pinion preferably is disposed on a shaft that is placed so as to be rotatable in the holder, which shaft is in engagement with the first operation means for being rotated thereby, wherein the shaft preferably is bearing mounted in the holder body.

12. Device according to claim 11, wherein the shaft is provided with a second pinion that is in engagement with the first operation means, wherein preferably at opposite ends the shaft is provided with the first and second pinions.

13. Device according to claim 11 or 12, wherein the shaft is oriented transverse to the path of movement of the pressure arm.

14. Device according to claim 11, 12 or 13, wherein the first operation means, particularly the operation member, comprise a second rack, which is in engagement with the second pinion, wherein the second rack preferably is situated on a bent toothed edge, which preferably is circularly bent, the toothed edge being convex.

15. Device according to claim 14, when depending on any one of the claims 3-7, wherein the second rack is situated on the operation member, which in the stand-by position projects sidewards from the holder body, preferably also in the operative position projecting sidewards from the holder body.

16. Device according to any one of the preceding claims, suitable for retaining whole carcasses, at least whole breasts, of poultry.

17. Device according to any one of the claims 1-7, the motion of the pressure arm being a rotating motion.

18. Device according to claim 17, wherein the pressure arm is part of a lever, which is attached to the holder body so as to be rotatable about a first hinge, wherein the lever preferably further comprises an operation arm, which is situated at the side of the first hinge that faces away from the pressure arm, wherein the operation device comprises an operation rod, of which a first end is movably connected to the operation arm, which operation rod is linearly slidable substantially within the holder body parallel to the centre longitudinal plane, between first and second positions that correspond to the stand-by position and the operative position of the pressure arm, respectively, wherein preferably with a second end the operation rod is movably connected to the first operation means, wherein preferably a cam is attached on the second end of the operation rod, which cam is guided in an elongated hole in the first operation means.

19. Device according to claim 18, when depending on claim 7, wherein the plate-shaped operation member is provided with the elongated hole.

20. Device according to claim 9, 18 or 19, wherein the elongated hole is inclined to the process direction and has turned ends for the cam, wherein at least the turned elongated hole end for the cam is formed for a locking action in operative position.

21. Device according to any one of the claims 17-20, wherein the operation rod is slideable according to a line that is spaced apart from the first hinge, preferably near the lower side of the holder body, which lower side is situated near a conveyor for the holder, wherein the operation rod preferably is movable according to a line that is parallel to the process direction.

22. Device according to claim 21, wherein at the first end the operation rod is provided with an upright arm which is rigidly connected thereto and which is rotatably connected to the operation arm of the lever, wherein the upright arm preferably is provided with a preferably straight elongated hole in which a cam attached on the operation arm is guided, wherein the elongated hole slopes with respect to the process direction, preferably upwards in the process direction.

23. Device according to any one of the claims 16-22, adapted for retaining portions of carcasses, particularly breast caps.

24. Device according to any one of the preceding claims, wherein the holder body is attached either lying or horizontally on a conveyor.

25. Device according to any one of the preceding claims, wherein the holder body is attached on a link conveyor.

26. Device according to any one of the preceding claims, wherein the first operation means are situated at the same side of the support surface of the conveyor as the holder bodies.

27. Device according to any one of the preceding claims, wherein the lower side of the holder body is attached, preferably flat, on a support surface of a conveyor, rotatably with respect to said support surface, wherein the holder further comprises rotation means for rotating the holder body about an axis of rotation that is situated perpendicular to the process direction and parallel to the centre longitudinal plane, preferably therein, wherein the rotation means preferably comprise a set of rotation members that are situated at the side of the conveyor that faces away from the support surface and are connected to the holder body for rotation thereof and positioned for engagement with a stationary positioned operation means.

28. Device according to claim 27, wherein the rotation members comprise at least one toothed wheel, capable of cooperation with a stationary positioned rack.

29. Device according to claim 27, wherein the rotation members are connected to the holder body by means of an upright rod extending through the conveyor.

30. Device according to claim 28 or 29, wherein the rotation members comprise a toothed wheel train of at least two toothed wheels.

31. Device according to any one of the claims 27-30, further comprising means for locking the position of the holder body in the desired rotation positions, and means for unlocking them in order to make rotation possible, wherein the means for locking preferably are adapted to be operative in two 180 degrees different rotation positions of the holder body.

32. Holder suitable and intended for a device according to any one of the preceding claims.

33. Slaughter line provided with a device according to any one of the preceding claims.
